# EUROPEAN PATENT APPLICATION

(11) **EP 1 244 272 A2**
(43) Date of publication of application: **25.09.2002**
(21) Application number: 02251099.4
(22) Date of filing: 19.02.2002
(51) Int. Cl.: H04L 29/06

(54) **Digital credential exchange**

(30) Priority: 20.02.2001 GB 0104097
(71) Applicant: Hewlett-Packard Company, Palo Alto, CA 94304 (US)
(72) Inventor: Casassa-Mont, Marco, Stoke Gifford, Bristol BS34 8BF (GB); Brown, Richard, Bristol BS36 2BP (GB)
(74) Representative: Harrison, Christopher John

(57) **Abstract**

A computer system comprising a first computer node coupled to a second computer node via a communication network, the first node and second node being arranged to allow a secure connection to be established between the first and second nodes, the first node having a processor responsive to the interaction of a user for initiating the transfer of a digital credential over a secure connection established between the first node and second node.

## Description

The present invention relates to the exchange of digital credentials.

As the popularity of the internet has grown so has the number of internet services available on the internet, both at the business to consumer and business to business level.

However, an issue of concern to both consumers and businesses with respect to the provision of e-commerce and associated services is that of security and trust.

To help address this issue secure web protocols have been developed, for example the secure sockets layer (SSL) protocol. The security provisions provided by SSL include server authentication, client authentication, data integrity and confidentiality.

Authentication is provided by the exchange of digital identity certificates between two users establishing a secure connection over the internet. The digital identity certificates being issued by trusted third parties, for example certification authorities CA, who are responsible for managing the digital identity certificates life cycle. The exchange of the digital certificates is an important process in the establishing of security and trust between two parties interacting on the internet. This is particularly so when the parties have never had any previous business interaction.

Once authentication has been achieved the SSL protocol establishes a secure connection between the two users, over which any data transmitted is encrypted, thereby maintaining confidentiality.

However, other than user authentication current secure web browsers have no 'real-time' mechanisms for determining the level of trust that should be attributed to the users, for example the ability of a user to pay. As such, information provided by a user over the secure connection, for example credit card information, will be un-validated. Therefore, the recipient of the information has to use the information at his or her own risk, which for two parties that has had no previous business relationship, is undesirable.

It is desirable to improve this situation.

In accordance with one aspect of the present invention there is provided a method of exchanging a digital credential between a first computer node and a second computer node, the method comprising establishing a secure connection between the first node and second node over a communication network; initiating, in response to the interaction of a user of a computer node on the network, the transfer of a digital credential from the first node to the second node over the secure connection.

This provides the advantage of allowing a user to make decisions about the trustworthiness of another user with which no previous business relationship has existed.

The term digital credential can include, identity certificate, attribute credential and anonymous credential.

Identity certificates are a collection of verifiable data containing information about the identity of entities, for example people, systems and applications. X.509 identity certificates are currently the most popular certificates used on the internet. An X.509 identity certificate binds a name to a public key.

Attribute credentials are a collection of verifiable attributes and properties associated to people, systems, applications and services.

Anonymous credentials contain attributes that are not associated to any identity credential, for example, electronic cash.

Users can analyse credentials to make decisions about the trustworthiness of the owners of the credentials.

Preferably the method further comprising establishing a plurality of secure connections between the first node and a plurality of respective computer nodes and initiating, in response to the interaction of a user of a computer node on the network, the transfer of a digital credential from the first node to one or more of the respective computer nodes over the respective secure connections.

Preferably the entity is a user or a system or a service, wherein the digital credential determines access to a service.

Suitably presenting to a user the digital credential associated with the secure connection.

In accordance with a second aspect of the present invention there is provided a computer system comprising a first computer node coupled to a second computer node via a communication network, the first node and second node being arranged to allow a secure connection to be established between the first and second nodes, the first node having a processor responsive to the interaction of a user for initiating the transfer of a digital credential over the secure connection established between the first node and second node.

Preferably the first node includes memory for storing the digital credential associated with the secure connection and a display for presenting to a user the digital credential.

Suitably a node further comprises a controller for arranging digital credentials into groups, the groups being associated with a respective secure connection to allow a user to monitor digital credentials associated with a secure connection.

In accordance with a third aspect of the present invention there is provided a computer node for coupling to a second computer node via an electronic network, the computer node being arranged to allow a secure connection to be established with the second computer node, the computer node comprising a processor responsive to the interaction of a user for initiating the transfer of a digital credential over a secure connection established between the first node and second node.

Preferably the node includes memory for storing the digital credential associated with the secure connection and a display for presenting to a user the digital credential.

Most preferably the node further includes a controller for arranging digital credentials into groups, the groups being associated with a respective secure connection to allow a user to monitor digital credentials associated with a secure connection.

For a better understanding of the present invention and to understand how the same may be brought into effect reference will now be made, by way of one example only, to the accompanying drawings, in which:-
Figure 1 illustrates a computer system according to one embodiment of the present invention;
Figure 2 illustrates a computer system according to one embodiment of the present invention;
Figure 3 illustrates a computer node according to one embodiment of the present invention;
Figure 4 illustrates a user interface screen associated with one embodiment of the present invention;
Figure 5 illustrates a user interface screen associated with one embodiment of the present invention;
Figure 6 illustrates a user interface screen associated with one embodiment of the present invention;
Figure 7 illustrates a computer node according to one embodiment of the present invention;
Figure 8 illustrates a user interface screen associated with one embodiment of the present invention.

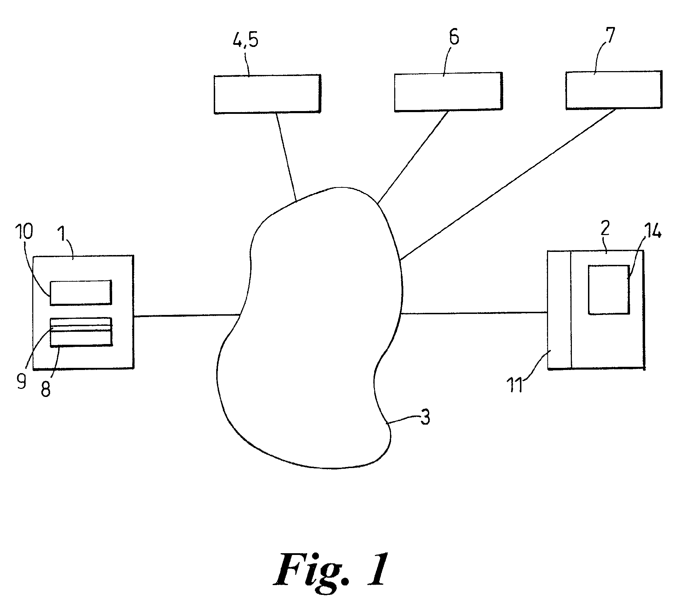

Figure 1 shows a first computer node 1 (which could be, for example, a single computer or a plurality of computers), connected to a second computer 2 (which could also be, for example, a single computer or a plurality of computers), via the internet 3. Both computer 1 and computer 2 have associated displays and keyboards, not shown. Also connected to the internet are certificate authorities, for example online certificate status protocol responder 4 OCSP, certificate verification server protocol responder 5 CVSP, certificate authorities CA 6 and attribute authorities 7 AA (for a description of these authorities see the internet engineering task force website www.ietf.org).

Computer 1 is arranged to support, typically, business or private users requiring services from a service provider on the internet 3, and as such includes a network protocol stack 8 including an internet browser 9 for browsing the internet, as is well known to a person skilled in the art. In addition to the browser 9 the protocol stack includes a 'browser plug in' 10 for handling trust related processes such as helping a user to explicitly manage the trustworthiness of digital credentials and pushing and pulling digital credentials during active internet sessions, as described below.

Computer 2 is arranged to support a service provider, typically an enterprise, for the provision of services to a client via the internet 3. Computer 2 incorporates a webserver 11 for providing web access to computer 2 for web clients, for example computer 1, as is well known to a person skilled in the art. In addition to a network protocol stack 12, computer 2 also includes a digital credential management system 13 for handling trust related processes, such as the management of large numbers of heterogeneous credentials in real time, as described below.

As computer 1 is arranged to support a user requiring a service, to aid clarity computer 1 will also, in this description, be referred to as user 1 to identify the user, which could be a human operator or a software/hardware agent, of computer 1.

As computer 2 is arranged to support an enterprise providing an internet service, to aid clarity computer 2 will also, in this description, be referred to as enterprise 2 to identify the enterprise which could be a human operator or a software/hardware agent, of computer 2.

To enhance the level of security between a service provider using computer 2 and a web client using computer 1 a secure connection, for example a secure socket layer SSL connection, (i.e. a session) is established between computer 1 and the webserver 11 incorporated in computer 2, as is well known to a person skilled in the art. The SSL allows the authentication of users by the mutual transfer of digital identity certificates, the identity certificates being signed by a trusted third party such as a certificate authority CA 6, as is well known to a person skilled in the art. Once the users have been authenticated private keys are exchanged to allow encryption of data exchanged between the users.

To allow further analyses and managing, by the enterprise 2, of digital credentials (e.g. identity certificates, attribute credentials) associated with a session digital credentials are passed to a digital credential management system 14 at the enterprise side of the secure connection (i.e. computer 2).

The digital credential management system 14 is able to provide a full range of validation checks on the received digital credentials associated with a session according to a trust policy that is defined for the enterprise 2, for example by a computer administrator.

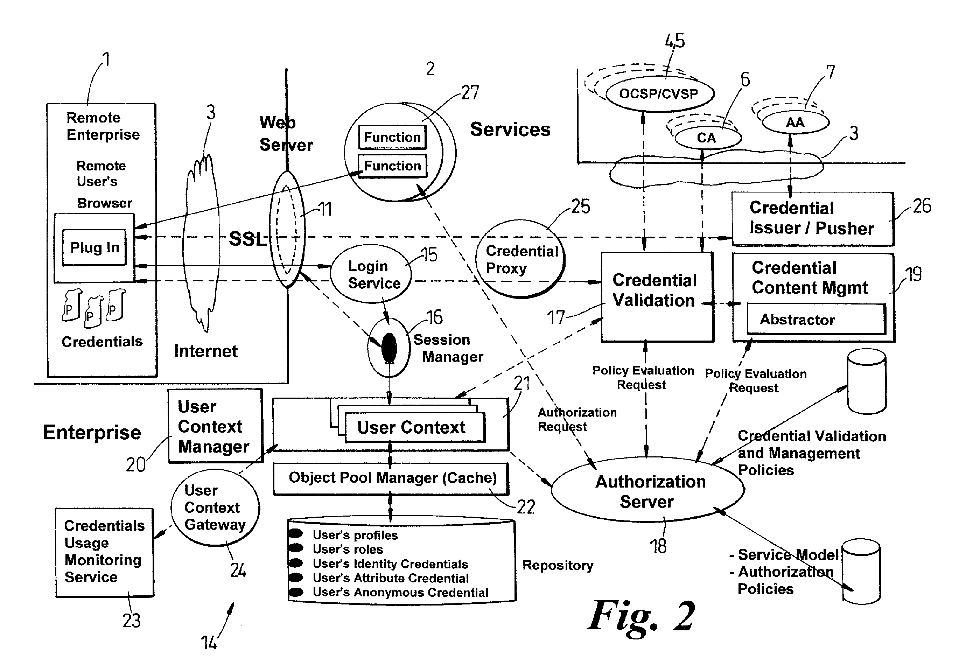

The validation checking of digital identity certificates associated with a session for the purposes of providing a service is defined as the user login phase. For this purpose the digital credential management system 14 incorporates a login service module, as shown in figure 2, that interacts with a session manager module to create a new session object that is associated with a secure session, for its whole lifetime. The session object associates extra users' information to their session, for example bank statements associated to a user.

The login service module 16 retrieves the user's identity certificate from the web server 11 (used to establish the SSL session) and sends the certificate to a credential validation server module 17 for validation and trust management purposes.

The credentials validation server module 17 executes a two-phase control on the digital credential. First it performs "classic" verification tasks, like integrity and validation path checks. It interacts with external entities such as CA, OCSP and CVSP to check if the credential is still valid. OCSP and CVSP responders perform basic validation tasks on-line. Second, the module 17 determines the trustworthiness of the credential against explicit enterprise policies, for example checking explicit constraints on the validation path, on the issuer of the credentials, on the context in which the credential has been send.

Validation policies can be defined by an administrator and evaluated by an authorization server module 18, incorporated in the digital credential management system 14, thereby allowing the second task to be performed at runtime.

The authorization server module 18 interprets authorization and validation policies on the fly. Policies are loaded when the authorisation server module 18 starts up, along with the relevant models (service model, credential models, etc.). At any time policies and models can be modified and reloaded by the authorization server module 18 without service disruption. This provides a high degree of freedom and flexibility to the administrator when dealing with trust management issues related to digital credentials.

If the digital credential under verification does not satisfy enterprise trust and validation policies, the credential is rejected and an error message is sent back to the user. If the digital credential satisfies enterprise policies, then it is passed to a credential content management module 19 where the digital credential is abstracted and its content analysed and managed according to enterprise policies. The credential validation server module manages the interaction with the credential content manager module 19.

The digital credential content management module receives digital credentials from the credential validation server module 17 to perform further trust analysis on the credential content.

The credential content management module 19 abstracts a digital credential according to an abstraction model to remove the credentials dependency on its low-level format. This allows the abstracted credentials to be seen as a collection of attributes by the other validation and authorization framework components, independently of their original representations.

The credential content management module 19 also manages the content of a digital credential according to trust and credential content management policies defined by the enterprise 2. These policies define which credential components (attributes) need to be trusted, depending on their values, their issuers, the presence of other credentials, etc. The evaluation of these policies is delegated to the authorization server 18.

Every type of digital credential (identity, attribute and anonymous credential) is subject to this process.

Once the digital credential has been abstracted and its content processed, the abstracted credential is returned to the credential validation server module 17.

The credential validation server module 17 is interfaced to a user context manager module 20, where the credential validation server module 17 forwards the abstracted digital credentials to the user context manager module 20. The user context manager module 20 stores the abstracted digital credentials into a user context area 21 associated with a user's session.

A user context area 21 contains all the relevant information known about a user during an active web session, for example user profile, roles and digital credentials.

The user context manager module 20 manages the user context areas 21 and their associations to users' sessions, for the entire lifetime of these sessions.

The user context manager module 20 provides a set of application program interface's API to access the content of a specific user context area 21 at different levels of abstraction. It allows the retrieval of attributes independently from their source (for example user profile, role and digital credential). In such a case it attaches to them metadata like their scope, qualifiers to allow analysis and evaluation by the authorisation server module 18.

When a new user context area 21 is created, the user context manager module 20 retrieves from a database (not shown) of the enterprise 2 (service provider) relevant user information, like their profile and their roles and stores it in this user context. The stored information may have been obtained during previous transactions.

Each time the credential content management service module 19 successfully abstracts a user's credential, this credential is sent to the user context manager module 20 and stored in a user context area 21.

The user context manager module interacts with an object pool manager module 22 to dynamically manage the content of a user context.

Dynamic content management is useful as a particular role or a user profile could be valid just for a predefined period of time. Additionally a security administrator can modify the content of user profiles and roles at run time or during a user's session. Further, new digital credentials could be added to a user context area 21 during a user session and digital credentials could be disabled/removed from a user context area 21 during a user session.

The ability to deal with these dynamic changes is important for the provision of real time authorization and access control service. The object pool manager module 22 is in charge of dynamically updating the content of user contexts each time one of the above events occurs.

The user context manager module 20 supplies to a digital credentials usage monitoring service module 23 updated sets of active credentials (i.e. credentials that are currently used and enabled in a user context area and digital credential usage monitoring service monitoring 23 executes the request of enabling/disabling credentials depending on trust and business management decisions.

The authorization server module 18 accesses a content of user contexts area 21 whilst evaluating policies. Policies may contain explicit constraints that need to be evaluated against the content of a user context area 21.

A user context gateway 24 manages the interaction between the user context manager module 20 and the digital credentials usage monitoring service module 23. It provides a high-level application program interface API that can be used to access both user context manager module 20 and digital credentials usage monitoring service module 23 functionalities.

The user context gateway 24 acts as a gateway in the following cases; (i) when the user context manager module 20 sends to the digital credentials usage monitoring service module 23 an updated list of the digital credentials involved in active users' sessions; and (ii) when the digital credentials usage monitoring service module 23 asks the user context manager module 30 to enable/disable digital credentials, depending on trust and business management decisions.

Once user 1 has established a secure connection with enterprise 2 and has successfully completed the login phase and had their digital credentials validated by the enterprise 2, as described above, the enterprise 2 can provide a requested service over the secure session. Alternatively, before the service is provided the enterprise 2 may request the user to provide (push) further digital credentials (e.g. attribute credentials) in order to allow authorization to access services (i.e. to ensure that the enterprise has sufficient trust in the user).

User 1 can push an attribute credential to the enterprise 2 by using the browser plug-in 10, as described below. The browser plug-in 10 wraps a credential in a extended mark-up language XML message, contacts a credential proxy module 25 associated with the digital credential management system 14 in the enterprise/computer 2 and sends the message to the proxy module 25 over the secure connection.

The enterprise credential proxy module 25 is in charge of managing the push and pull process of attribute credentials.

During the push phase, the enterprise credential proxy module 25 extracts the attribute credential from the XML message and sends it to the enterprise credential validation server module 17 to be validated.

If the attribute credential is valid, it is sent to the credential content management service module 19 that abstracts it and sends it to the user context manager module 20.

The user context manager module 20 stores the digital credential in a user context area 21 associated with a relevant secure session and sends a copy of the credential to the credentials usage monitoring service module 23 to enable a real time monitoring of this credential.

User 1 can invoke the process of pushing a digital credential to the enterprise 2 at any time (and more than once) during an active user's session with the enterprise 2.

In addition the user 1 might want to obtain more information about an enterprise 2, before trusting its services and exposing their digital credentials to it. The user 1 may request the enterprise 2 to send them verifiable enterprise credentials containing trusted information (issued by a trusted third parties), about the way the enterprise operates, the quality of its services, references, etc.

Further, the enterprise 2 (or an entity on its behalf) can issue and send new digital credentials to user 1, which will be owned by the user. For example, where a bank sends digital statements to users containing information about their accounts. These user's credentials can enable further business transactions with other enterprises.

To request a digital credential (i.e. pull) from enterprise 2, user 1 sends a XML message to the enterprise 2 to request digital credentials. This message could contain a request to obtain enterprise's credentials or to collect new user's credentials. The request process can be very simple low level communication and request mechanisms can be made transparent to the user. The messages are sent via the associated secure connection.

The enterprise credential proxy module 25 intercepts the user's request message and interprets it. If the request is valid, the proxy module 25 interacts with a credential issuer/pusher module 26.

The credential issuer/pusher module 26 is responsible for sending the enterprise's credentials to user 1 over the secure session, after verifying if the user 1 is entitled to receive the credentials. In order to do this, it interacts with the authorization server module 18 to evaluate proper polices based on the content of the current user context area 21. The enterprise credentials are sent to the credential proxy module 25, which wraps the credentials in another XML message and sends the message to the user 1.

In addition the credential issuer/pusher module 26 also sends new user's credentials to user 1 over a secure session. This allows new credentials to be issued to user 1 in real time. The issuer of these credentials can be the module 26 itself or an external attribute authority. New digital credentials can be associated to the current user's identity or they can be anonymous. The module 26 verifies if the remote user is entitled to receive the new credentials. These new digital credentials are sent to the credential proxy module 25, which wraps the message in a XML message and sends it to the user over the secure connection.

The process of pulling digital credentials from enterprise 2 can happen at any time and more that once during an active user's session with the enterprise 2.

The process of exchanging credentials over a secure connection, as described above, can be used to establish trust or to increase the level of trust between two parties during business interactions. This enhances the process of providing services over the internet with customers that you have had no previous business relationship.

This embodiment allows authorization policies to be associated to a service where the policies can be defined in a service model. If the authorization polices are defined in a service model the authorization server module 18 loads the service model at start time (i.e. when authorization server module 18 is 'booted up'). Should the policies in the service model be modified, the authorization server module 18 can reload them at any time, without any service disruption.

In this embodiment, authorization is driven by policies. Depending on the service and the service functions a user wants to access, the authorization server module 18 is able to retrieve the correct set of authorization policies and evaluate them.

Different policy evaluation strategies can apply, so for example, if at least one relevant policy is satisfied, the authorization is granted and the service is provided.

Whilst making authorization decisions, the authorization server module 18 can access a broad range of information. For example, service function information; service parameters; system information, like time, date, external access control information; and the content of the user context area 21 associated to the user in the current session: user profile, user's roles, user's digital credentials.

As stated above the management of digital credential on the user side is based on a browser plug-in 10 able to exchange credentials with enterprise 2 by using an XML based protocol. XML is used because ease and simplicity of use, however other languages may be used, for example HTML.

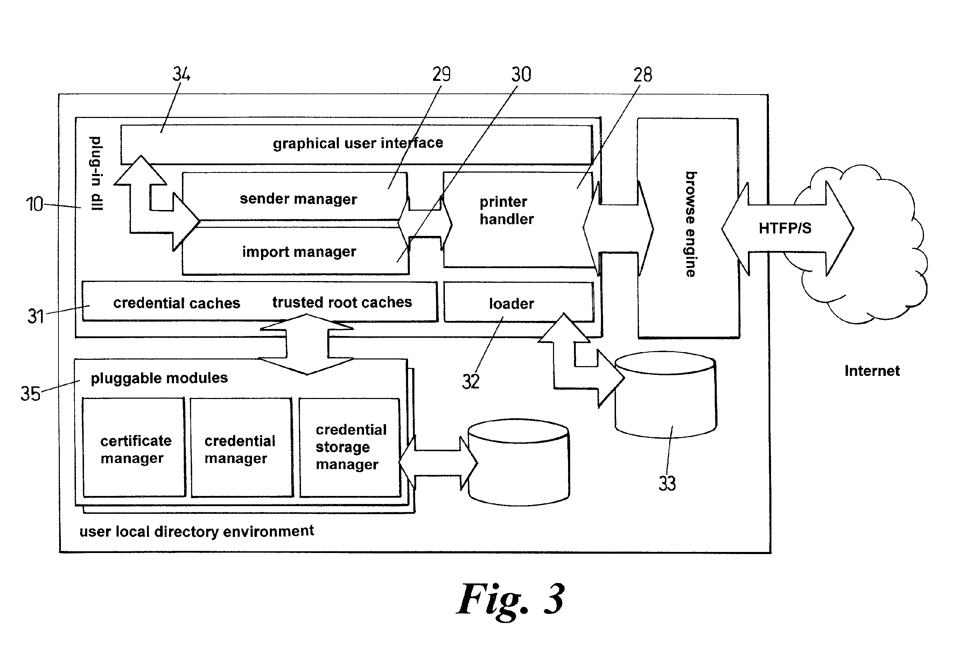

As shown in figure 3 the browser plug-in 10 includes a XML-based protocol handler module 28, a sender/importer modules 29,30, a cache 31, a loader module32, credential storage 33, a graphical user interface module 34 and pluggable modules 35.

The XML-based protocol handler module 28 manages incoming and out coming XML messages. It implements an interpreter of the XML protocol to deal with the push and pulling of messages.

The protocol consists of three XML messages, an INIT, a PUSH and PULL message.

The INIT message is a message containing initialisation information for the browser plug-in and includes the URL of the credential proxy module 25; and filtering information on digital credentials that can be sent by enterprise 2 to the user 1 (based, for example, on the credential issuer and signer).

The PUSH message contains one or more digital credentials sent by the user 1 to the enterprise.

The PULL message contains one or more digital credentials sent by the enterprise 2 to the user 1.

As the XML messages are exchanged on a secure connection (based on SSL) the messages do not need to be signed.

The sender/import modules 29, 30 are in charge of dealing with the process of pushing and pulling digital credentials.

The import module 30 extracts and manages digital credentials that have been sent to the user 1 by enterprise 2. In particular it manages attribute credentials pushed by the enterprise 2. These credentials could belong to the enterprise 2 (to increase the level of trust) or to the user 1 (new attribute credentials associated to the user). The import module 30 is able to discriminate between the above two cases and associate credentials to the right owner. The import module 30 interacts with external pluggable modules 35 (described below) to verify the trustworthiness of digital credentials and store them. The import module 30 is driven by the graphical user interface module 34.

The sender module 29 deals with digital credentials that have been sent by the user 1 to enterprise 2. It verifies if the selected attribute credentials can be pushed to the enterprise 2 by analysing the current context (e.g. user's identity certificate, association of attribute credentials to this identity, etc.) The sender module 29 creates the XML messages that are going to be pushed to the enterprise 2. The sender module 29 is driven by the graphical user interface module 34.

The cache 31 is a volatile cache to store digital credentials involved in web sessions. These credentials may belong to the user 1 or the enterprise 2. Part of the cache memory is used to store the set of trusted CA roots (used for trust verification) retrieved from the credential storage 33.

The loader module 32 loads X.509 identity certificates from the credential storage 33, which includes trusted root CA certificates. These certificates are used for credential validation purposes.

The pluggable modules 35 are external to the browser plug-in 10. They provide core functionalities in term of credential management, for example validation, verification, storage. These modules 35 are plugged-in in the browser plug-in 10. This approach provides freedom to use proper and ad-hoc validation and storage solutions. User can implement their own ad-hoc validation and storage modules according to their requirements.

The credential storage 33 is a secure storage for attribute credentials. While identity certificates (X.509 based) are stored in the credential storage 33, digital signed XML attribute credentials are explicitly stored and secured in a separate database.

The graphical user interface module 34 is arranged to allow the credential information to be displayed on the display (not shown) and for user 1 to manage the secure sessions, thereby allowing the overall user experience to be simplified when dealing with digital credentials and associated management of trust.

The graphical user interface module 34 can arrange the whole set of digital credentials exchanged and involved in an active web session between a user 1 and a enterprise 2 to be displayed. For example, identity certificates and attribute credentials pushed by the user 1 to the enterprise 2; and identity certificates and attribute credentials owned by the enterprise 2 and pushed by enterprise 2 to the user 1.

The graphical user interface module 34 can be configured to automatically notified user 1 when a new digital credential has been sent to user 1. The user 1 can accept or reject a credential after the trust verification and validation processes (automatically executed by the system).

During a web session, the graphical user interface module 34 manages and checks the associations between attribute certificates and the legitimate identity certificates. In particular, this control is performed on incoming digital credentials. The graphical user interface module 34 automatically rejects attribute credentials that are not trusted or do not relate to any of the identity certificates used in the current session.

The graphical user interface module 34 dynamically manages the portfolio of active user's credentials. The graphical user interface module 34 can be configured to just present to the user 1 the list of attribute certificates the user 1 is entitled to push to the enterprise 2 (set of attribute certificates associated to the current identity).

Pushing a credential to the enterprise 2, from the users perspective, can simply be the dragging and dropping of an attribute credential in a session box (i.e. the graphic box on the display that represents the secure connection).

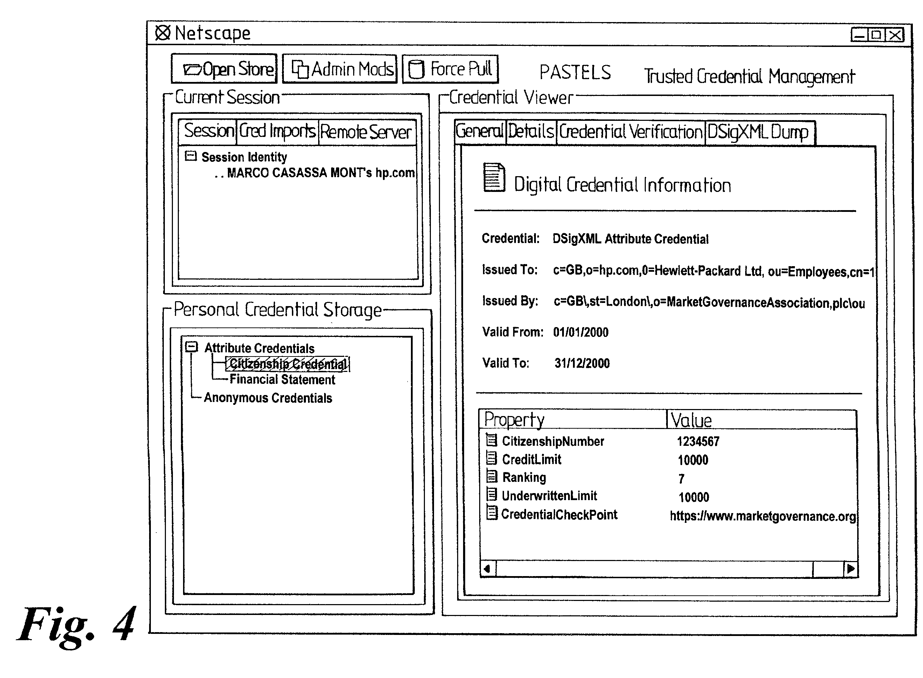

Figures 4 illustrates an example of a possible user interface screen. The top left panel of the user interface screen, shown in figure 4, displays the updated set of digital credentials that have been exchanged during an active session both by the user 1 and the enterprise 2. This panel contains a reference to the identity certificate used by the user 1 to establish the SSL connection and any attribute credentials that may have been transferred over the SSL connection.

The bottom left panel of the user interface screen, shown in figure 4, provides information about user's credentials. In particular it displays only the attribute credentials that are associated to the current identity certificate.

The user can exchange any of their credentials by selecting the appropriate credential and drag and dropping it in the "Session" panel.

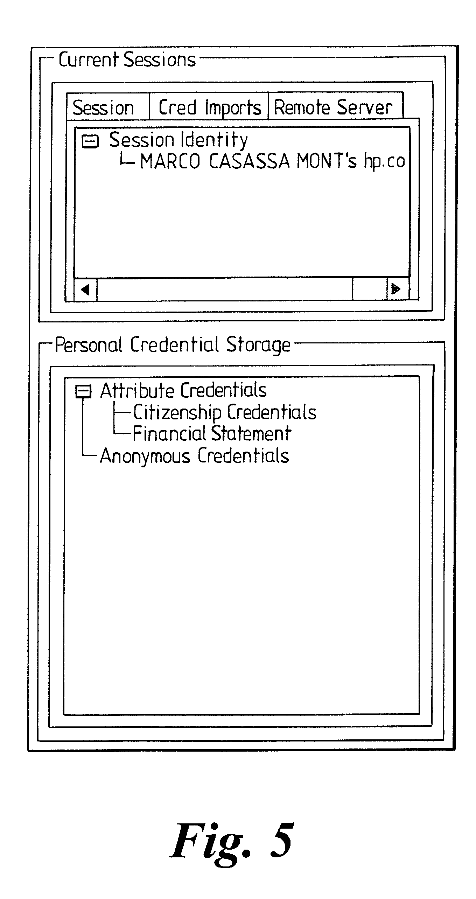

Figure 5 shows a view of the user interface screen after the user has pushed a citizenship credential.

The user interface panels can display both user's credentials and the credentials exchanged by with enterprise 2.

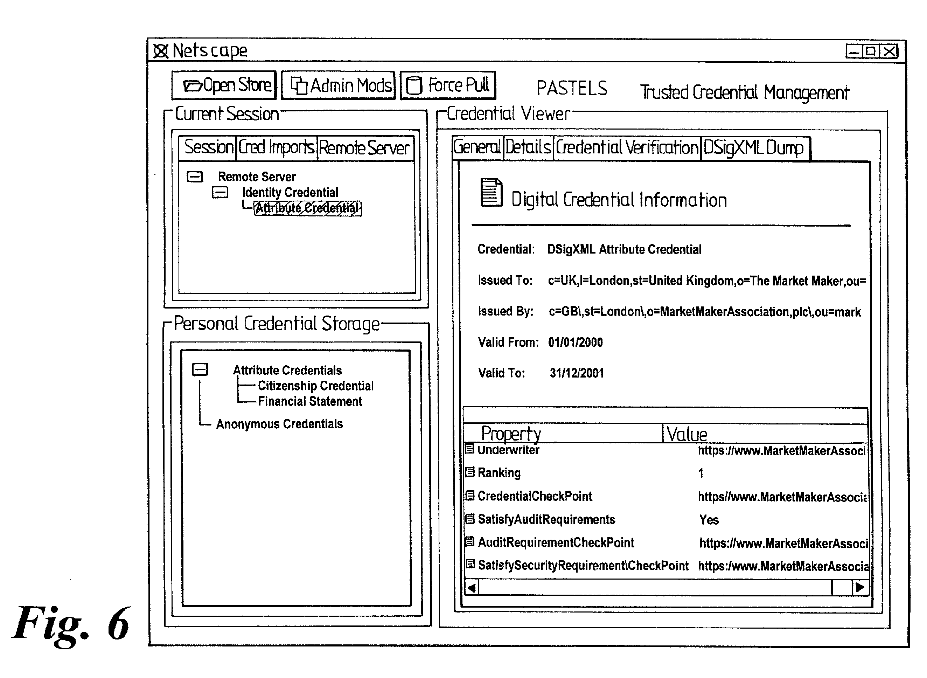

Figure 6 shows a user interface screen displaying the contents of an attribute credential provided by a market maker to the user. The attributes contained in the credential can be relevant to increase the perception of trust. For example, the attribute credential shown in figure 6 shows that the market maker is compliant with the security and audit requirements:

A user can administer at any time its current portfolio of digital credentials, even when they are no active sessions.

The corresponding module on the enterprise 2 for handling the XML-based messages during an active secure session is the credential proxy server module 25.

As described above the credential proxy server module 25 receives messages containing digital credentials sent by the user to the enterprise 2. It extracts these credentials from the XML message and sends the credentials to the validation server module 17, which validates the certificates and adds them to the appropriate user context area 21.

Digital credentials to be sent by the enterprise 2 to user 1 are forwarded to the credential proxy server module 25. The credential proxy server module 25 wraps the digital credentials in a XML message and sends the message to the user's browser plug-in 10 when required over the secure session.

To provide real time status of a digital credential the credential usage monitoring service module 23 implements a real time monitoring system for digital credentials presented by user 1 to enterprise 2, during an active web sessions, as described below.

This credential usage monitoring service module 23 is able to deal with real time, session-based credential validation and aggregation. The module 23 can provide different views on set of credentials to a security administrator and tools for validating credential trustworthiness against enterprise policies.

In addition the credential usage monitoring service module 23 can retrieve active digital credentials from the user context manager module 20 and aggregates them according to views required by the security administrator.

Examples of views supported by the credential usage monitoring service module 23 are; aggregation of attribute credentials and identity certificates in the context of a web session (between user 1 and the enterprise 2); aggregation of attribute credentials and identity credentials depending on the presence of specific attributes. For example credentials can be aggregated depending on the name of the company the owner of a credential works for or the name of a particular attribute (Credit Limit, Citizenship, etc.).

Further the credential usage monitoring service module 23 can provide a dynamic control over the usage of digital credentials at the service level.

For example an administrator can verify the validity of digital credentials using the credential usage monitoring service module 23 to interact with the validation service module 17 (driven by policies) or external validation mechanisms. Also an administrator can enable or disable users' credentials in real time. The credential usage monitoring service module 23 can interact with the user context manager module 20 to update its content.

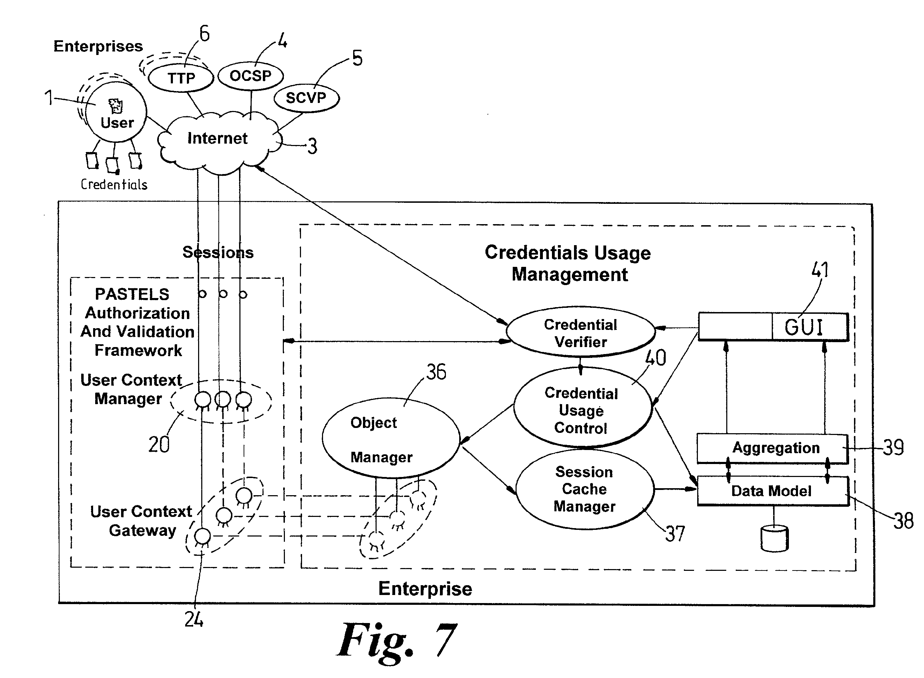

As shown in figure 7, the credential usage monitoring service manager 23 includes an object manager module 36, a session cache manager module 37, a data model module 38, an aggregation module 39, a credential usage control module 40 and a graphical user interface module 41.

The object manager module 36 acts as a proxy between the user context gateway module 24 and the session cache manager module 37. The object manager module 36 retrieves credentials contained in active user contexts areas 21 and the list of active users' sessions. The module 36 then provides this information to the session cache manager module 37. Should the status of a credential change, the module will communicate this change to the user context manager 20.

The session cache manager module 37 caches information about the current set of active sessions and their associations to digital credentials. The session cache manager module 37 provides the cached data to the data model module 38.

The data model module 38 contains information relating to how to interpret the content of digital credentials associated to sessions and how to represent them graphically.

The aggregation module 39 implements functions to aggregate digital credentials depending on administrator's queries and selection criteria. These criteria could involve the content of digital credentials, value of particular attributes, association constraints, etc.

The credential usage control module 40 controls the validity and trustworthiness of digital credentials associated to active sessions whilst they are used to access services. The control is driven by enterprise policies. The credential usage control module 40 retrieves the set of credentials and sessions to be controlled from the aggregation module 39.

The most common controls performed on credentials include, checking the validity of credentials, verifying their trustworthiness against enterprise policies, verifying the validity of associations of attributes credentials with identity certificates.

The credential usage control module 40 can execute these controls in a programmable way. The controls can be scheduled and done periodically, each time a new credential is added or driven by administrator's initiatives.

The credential usage control module 40 notifies the object manager module 36 of any change of digital credential statuses.

An administrator can access the functionalities of the credential usage control module 40 by using a user interface associated with enterprise 2 via the graphical user interface 41.

The graphical user interface module 41 implements the graphical routines, which are accessible to an administrator by the user interface.

The graphical user interface module 41 generates user interface screens for display on a display (not shown),

The user interface screens simplifies the overall interaction of an administrator with the credential usage monitoring service module 23 by providing an abstract graphical representation of digital credentials and relationships among them.

The user interface screens display aggregations and views on digital credentials in an intuitive way and allows the administrator to easily access tools to manage the validity and trustworthiness of digital credentials.

The user interface screens can provides a list of all the active user contexts areas associated to user web sessions. The list can be updated dynamically, in real time.

An administrator can select or look for a set of credentials and execute operation on it (enable, disable and verification).

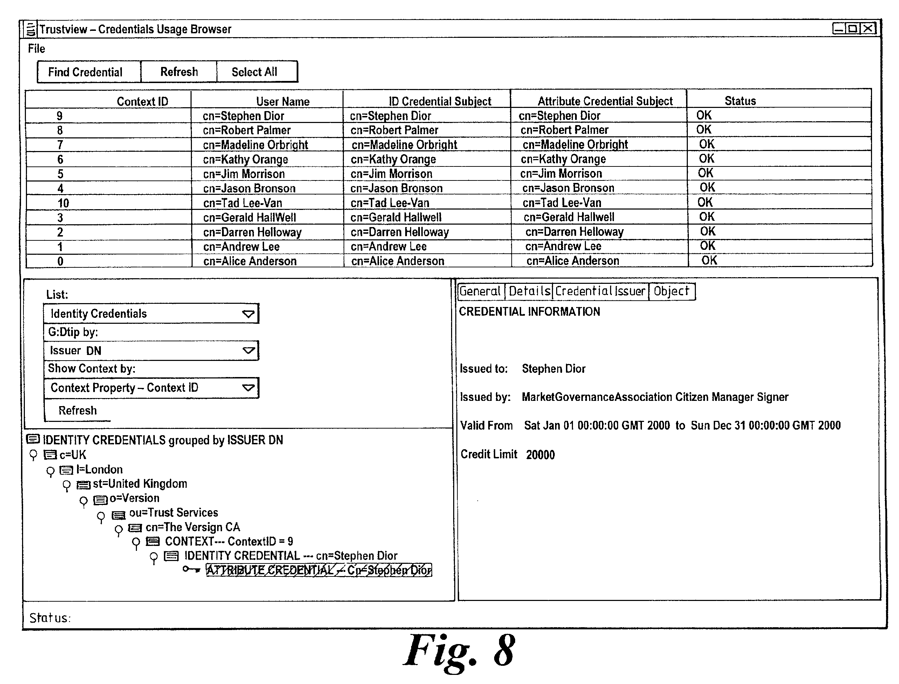

Figures 8 illustrate an example of a possible user interface screen. The top panel of the user interface screen, shown in figure 9, contains information about the current set of active contexts (active context list), each of them associated to an active user session. As the enterprise 2 is able to establish a plurality of secure connections with different users, at the same time, the interface screen is arranged to display each active user session.

Each row shown in the top panel of figure 8 is an abstraction of an active user context and it contains references to the associated identity and attribute credentials. The contents of this display are updated in real time each time new users log in, exit their connections or push new credentials.

The user interface allows an administrator to select rows or a sub set of them and apply search criteria. The user interface can be used to define search and grouping criteria for credentials.

The user interface can allow the administrator to directly intervene on credentials and change their status in real time.

## Claims

1. A method of exchanging a digital credential between a first computer node and a second computer node, the method comprising establishing a secure connection between the first node and second node over a communication network; initiating, in response to the interaction of a user of a computer node on the network, the transfer of a digital credential from the first node to the second node over the secure connection.

2. A method according to claim 1, further comprising establishing a plurality of secure connections between the first node and a plurality of respective computer nodes and initiating, in response to the interaction of a user of a computer node on the network, the transfer of a digital credential from the first node to one or more of the respective computer nodes over the respective secure connections.

3. A method according to claim 1 or 2, wherein the digital credential is an attribute credential of an entity.

4. A method according to claim 3, wherein the entity is a user or a system or a service.

5. A method according to any preceding claim, wherein the digital credential determines access to a service.

6. A method according to any of claims 1 to 4, wherein the digital credential is an identity certificate of a user.

7. A method according to any preceding claim, wherein the communication network is the internet.

8. A method according to any preceding claim, wherein the secure connection is a secure sockets layer session.

9. A method according to any preceding claim further comprising presenting to a user the digital credential associated with the secure connection.

10. A computer system comprising a first computer node coupled to a second computer node via a communication network, the first node and second node being arranged to allow a secure connection to be established between the first and second nodes, the first node having a processor responsive to the interaction of a user for initiating the transfer of a digital credential over the secure connection established between the first node and second node.

11. A computer system comprising a plurality of computer nodes coupled via a communication network, wherein a first node is arranged to allow a plurality of secure connections to be established between the first node and a plurality of other nodes coupled to the network, the first node being arranged to be responsive to the interaction of a user to initiate the transfer of a digital credential over the plurality of secure connections established between the first node and the respective other nodes.

12. A computer system according to claim 10 or 11, further comprising a verifier for verifying the digital certificate.

13. A computer system according to any of claims 10 to 12, wherein the first node includes memory for storing the digital credential associated with the secure connection and a display for presenting to a user the digital credential.

14. A computer system according to claim 13, wherein a node further comprises a controller for arranging digital credentials into groups, the groups being associated with a respective secure connection to allow a user to monitor digital credentials associated with a secure connection.

15. A computer node for coupling to a second computer node via a communication network, the computer node being arranged to allow a secure connection to be established with the second computer node, the computer node comprising a processor responsive to the interaction of a user for initiating the transfer of a digital credential over a secure connection established between the first node and second node.

16. A computer node according to claim 15, wherein the processor is arranged to receive a digital credential received over the secure connection.

17. A computer node according to claim 15 or 16, further comprising a verifier for verifying a digital credential.

18. A computer node according to any of claims 15 to 17, further comprising memory for storing the digital credential associated with the secure connection and a display for presenting to a user the digital credential.

19. A computer node according to claim 18, further comprising a controller for arranging digital credentials into groups, the groups being associated with a respective secure connection to allow a user to monitor digital credentials associated with a secure connection.
